# NEUE EUROPÄISCHE PATENTSCHRIFT

(11) **EP 1 652 608 B2**
(45) Veröffentlichungstag und Bekanntmachung des Hinweises auf die Entscheidung über den Einspruch: **13.10.2010**
(45) Hinweis auf die Patenterteilung: 23.04.2008
(21) Anmeldenummer: 04405664.6
(22) Anmeldetag: 29.10.2004
(51) Int. Cl.: B22F 3/15, B22F 7/02, B29C 47/38

(54) **Verfahren zum Herstellen einer Hartstoffschicht und beschichtetes Produkt**
Method for manufacturing a cermet layer and coated product
Procédé de fabrication d'une couche en cermet et produit revêtu

(43) Veröffentlichungstag der Anmeldung: 03.05.2006
(73) Patentinhaber: Kennametal HTM AG, 2503 Biel/Bienne (CH)
(72) Erfinder: Hofer, Beat, 4552 Derendingen (CH); Bruder, Lothar, 3294 Büren a. d. Aare (CH)
(74) Vertreter: AMMANN PATENTANWÄLTE AG BERN

(56) Entgegenhaltungen:
- DE-A1- 19 901 170
- GB-A- 2 214 523
- GB-A- 2 304 619
- US-A- 5 816 699
- BISHOP M F ET AL: "HIP-CLAD PRODUCTS FOR THE PLASTICS INDUSTRY" JOM, MINERALS, METALS AND MATERIALS SOCIETY, WARRENDALE, US, Bd. 51, Nr. 7, Juli 1999 (1999-07), Seiten 32-34, XP009042868 ISSN: 1047-4838
- PM-WERKSTOFFE FÜR WARMGEHENDE WERKZEUGE 2001, MAT.-WISS U. EWERKSTOFFTECH. 32, Seiten 422 - 433
- EINFLUSS ABRASIVER TEILCHEN AUF DEN WARMVERSCHLEISS VON METALL-PARTIKELL-VERBUNDEN IN ARGON UND LUFT Nr. 579, 1999, FORTSCHRITT. BER. VDI REIHE 5,
- VERSCHLEISSSCHUTZ DURCH HIP-CLADDING 28 Mai 2002 - 29 Mai 2002, 4. FACHTAGUNG "VERSCHLEISSSCHUTZ VON BAUTEILEN DURCH AUFTRAGSCHWEISSEN" (SAALE),
- HIP-CLADDING OF TOOLS 10 September 2002 - 13 September 2002, 6TH INTERNATIONAL TOOLING CONFERENCE,
- WEAR RESISTANT PM-COATINGS PRODUCED BY HIP-CLADDING Bd. 3, 17 Oktober 2004 - 21 Oktober 2004, PROCEEDINGS OF THE PM-WORLD CONGRESS AND EXHIBITION, WIEN, Seiten 797 - 802
- ENTWICKLUNG VON PM-WERKZEUGWERKSTOFFEN AUF FE-BASIS FÜR GRADIERTE STRUKTUREN 23 Oktober 1998 - 25 Oktober 1998, IX INTERNATIONALE PULVERMETALLURGISCHE TAGUNG IN DER DDR,
- PM-VERBUNDWERKSTOFFE ZUM VERSCHLEISSSCHUTZ 2000, HTM 55, Seiten 45 - 51
- HIP CLADDINGS FOR APPLICATION IN MINING AND MINERAL PROCESSING 02 Dezember 2002 - 05 Dezember 2002, 6TH INTERNATIONAL TRIBOLOGY CONFERENCE, AUSTRIB 2002, PERTH, AUSTRALIA,
- VERSCHLEISS UND VERSCHLEISSSCHUTZ VON SCHNECKE UND ZYLINDER IM EINSCHNECKENEXTRUDER
- HARTLEGIERUNG UND HARTVERBUNDWERKSTOFFE 1998, SPRINGER VERLAG,
- NEW HIP PROCESS FOR THE PRODUCTION OF CARBIDE WEAR PARTS 1990, ADVANCES IN POWDER METALLURGY, Seiten 95 - 114

## Beschreibung

Die vorliegende Erfindung bezieht sich auf die Herstellung einer Hartstoffschicht auf einem Grundkörper gemäss Oberbegriff des Anspruches 1 sowie auf das beschichtete Produkt des Verfahrens.

Stahlkörper relativ komplexer Struktur sind beispielsweise Extruderrohre von Doppelextrudern. Der Hohlraum dieser Rohre hat im Querschnitt ungefähr die Form einer Acht, d.h. zwei über die Endpunkte miteinander verbundene Teilkreise. An den Verbindungsstellen der Teilkreise entstehen scharfkantige Übergänge, die sogenannten Spickel.

Bei der Kunststoffextrusion werden die Extruder im Innern einer sehr hohen Belastung durch Verschleiss und Korrosion ausgesetzt. Um die Lebenszeit dieser Teile zu verlängern, versucht man durch verschiedenste Beschichtungen die Oberfläche im Innern widerstandsfähiger gegenüber den Kunststoffen, die heute mit Oxiden, Glasfasern und Mineralien angereichert werden, zu gestalten. Dies geschieht normalerweise durch das Ausschleudern von Schichten im Innern eines Rohres. Anschliessend wird das Rohr längs aufgeschnitten und zwei aufgeschnittene Rohre werden jeweils zu einem Extruderrohr zusammengeschweisst. Dabei ist es nicht möglich, die aufgeschleuderte Hartstoffschicht im Spickelbereich zu verbinden. Dadurch kann es im Spickelbereich zu Ausbrüchen und Korrosion kommen. Derartige Schleuderschichten werden auch mit Karbiden angereichert und erhöhen wesentlich den Verschleisswiderstand des Extruders.

Als weiteres Verfahren kommt das Aufschweissen von Hartstoffschichten direkt im Innern des Extruders in Frage. Dies ist aber mühsam und aufwendig, da nur Lage für Lage auf den Grundkörper aufgebracht werden kann und im Übergangsbereich sehr grosse Vermischungen zwischen Grundmaterial und den Hartstoffen stattfinden. Die reine Hartstoffschicht, angereichert mit Karbiden, ist sehr dünn und bietet keine durchgehende Verschleissbeständigkeit.

Eine andere Methode wurde von der Firma Conforma Clad Inc. gewählt. Wolfram-Karbide werden in einer Kobalt-NickelChrom-Matrix eingemischt und mit einem Binder auf Basis eines Kunststoffes vermischt. Diese Mischung wird als Folie hergestellt und weist eine sehr hohe Duktilität auf. Die Folie wird anschliessend als Beschichtungsmittel auf den Extruder im Innern aufgeklebt und durch eine Wärmebehandlung definitiv mit dem Grundmaterial verbunden. Der Kunststoffbinder in der Folie entweicht während dieser Wärmebehandlung, so dass am Ende nur die Hartstoffmischung mit dem Matrix und den Wolfram-Karbiden zurück bleibt. Diese Methode zeigt bezüglich Verschleiss sehr gute Resultate. Der Nachteil ist, dass die Schichtdicke relativ gering ist und im Spickelbereich die Beschichtung reissen kann und zum Abplatzen neigt. Auch ist der Porenanteil bei diesem aufgesinterten Werkstoff relativ hoch. Dies setzt wiederum der Haftfestigkeit Grenzen.

DE 199 01 170 A1 offenbart ein Verfahren zur Herstellung einer Schicht aus einer Eisenbasislegierung auf einem Stahlzylinder durch heißisostatisches Pressen, wobei die Eisenbasislegierung Bor, Kohlenstoff und Karbidbildner (Cr, Mo, V, W) enthält. Die Härte der Schicht beträgt 67 bis 68 HRC.

Die Publikation "PM-Wekstoffe für warmgehende Werkzeuge", Mat.-wiss. u. Werkstofftech. 32 (2001) 422-433 gibt verschleissfeste Schichten an, die mittels HIP hergestellt werden und aus verschleissfesten Metalllegierungen bestehen.

Eine andere Methode besteht darin, eine Eisenbasislegierung mit Karbiden zu mischen und diese einer heissisostatischen Pressung zu unterwerfen. Zur Erhöhung der Härte der Matrix aus der Eisenbasislegierung wird anschliessend eine Wärmebehandlung durchgeführt. Im Wesentlichen besteht sie aus einer Erwärmung auf z.B. 1'100 °C und Abschrecken auf Zimmertemperatur. Diese Nachbehandlung, die zum Erzielen einer hohen Gesamthärte nötig ist, führt jedoch zu Rissen wegen der unterschiedlichen Werkstoffe und der schnellen Abkühlung (z.B. durch flüssigen Stickstoff). Eine Herstellung grösserer Oberflächen ist damit ausgeschlossen.

Eine Aufgabe der vorliegenden Erfindung besteht darin, ein Verfahren anzugeben, mit dem eine eine Kante usw. eines Stahlkörpers oder eines Körpers aus einem Material von vergleichbarem Ausdehnungskoeffizienten besser bedeckende Hartstoffschicht mit geringerem Risiko einer Rissbildung herstellbar ist.

Ein Verfahren, das die erstgenannte Aufgabe löst, ist im Anspruch 1 angegeben. Die weiteren Ansprüche geben bevorzugte Ausführungsformen.

In der folgenden Beschreibung ist dabei unter Ausdehnungseffizient der Längenausdehnungskoeffizient in 10⁻⁶ grd⁻¹ zu verstehen. Prozentangaben sind Gewichtsprozente. Härteangaben in Vickers sind HV_{0,3}. Alle diese Definitionen gelten für die Beschreibung und die Ansprüche, soweit nichts anderes angegeben wird.

Die Erfindung wird anhand von bevorzugten Ausführungsbeispielen unter Bezugnahme auf Figuren erläutert. Es zeigen:
- Fig. 1: Querschnitt durch eine HIP-Kapsel;
- Fig. 2: Härteverlauf, Auftragung Härte über Abstand in Mikrometer von dem Übergang Kapsel-Hartstoffschicht für Ausführungsbeispiel 1; (negative Werte: in Kapsel; positive Werte: in Hartstoffschicht)
- Fig. 3: Mikroskopaufnahme von TiC-Pulver;
- Fig. 4: Schnittbild durch die verbundene Kapsel /Hartstoffschicht gemäss Vergleichsbeispiel 1;
- Fig. 5: Härteverlauf analog Fig. 2 für das Beispiel;
- Fig. 6: Mikroskopaufnahme von Cr₃C₂-Pulver;
- Fig. 7: Schnittbild analog Fig. 4 für das Beispiel; und
- Fig. 8: Mikroskopaufnahme VC-Pulver.

Aufgrund der nicht befriedigenden oben genannten Lösungen wurde versucht, durch das heissisostatische Pressen bessere Alternativen zu finden. Unter Verwendung verschiedenster Grundwerkstoffe und Karbide in Pulverform wurden verschiedene Mischungen in einen Extruder eingebracht. Zu beachten ist dabei, dass Karbide mit sehr hoher Härte größer 2000 HV_{0,3} und einem thermischen Ausdehnungsquoffizient größer als 6 verwendet wurden. Diese Auswahl wurde bewusst getroffen, um den Ausdehnungsquofizienten der Karbide im Grundwerkstoff anzupassen und damit Spannungen in der Schicht gegenüber dem Grundkörper abzubauen. In Frage kommen hier die Werkstoffe TiC, VC, Cr₃C₂, Nb oder auch Boride NbB₂, CrB₂. Als Korngrössen wurden Karbide oder Boride im Bereich 2 - 150 Micron, bevorzugt 3-96 Micron (Mikrometer) gewählt. Teilweise bestehen die Karbide aus Mischungen mit einer Nickel- oder Chrommatrix, oder aus einer Mischung Karbid plus Matrix aus Nickel und Chrom. Auch wurden Karbide, die mit dieser Matrix gesintert wurden, in der vorgängig bezeichneten Korngrösse verwendet.

Verwendet wurden Mischungen, die 20-80 Gewichtsprozent Karbidanteil aufweisen. Mischungen unter diesem Gewichtsprozentanteil zeigen zu wenig Verschleisswiderstand und Mischungen über diesem Prozentanteil sind in der Praxis kaum einsetzbar, da die Sprödigkeit zu gross ist. Der Vorteil dieser Erfindung ist die Auswahl der Karbide oder Boride nach dem Ausdehnungsquoffizienten grösser 6, vorzugsweise 10. Liegt dieser Ausdehnungsquoffizient unter 6, wie bei Wolfram-Karbiden, besteht die Gefahr von Rissen. Bedingt durch die hohen Ausdehnungsunterschiede des Grundkörpers, der Matrix und den Karbiden entstehen bei der Abkühlung Spannungen, die sich im kalten Körper schon direkt nach dem Aufsintern oder später bei der Bearbeitung als Risse dokumentieren. Durch die Wahl von Karbiden mit einem Ausdehnungskoeffizient von ca. 10 wurde diese Gefahr im Wesentlichen umgangen und das Risiko von Rissen bei der anschließenden Bearbeitung reduziert.

Als Grundmaterial in Pulverform für die Beimischung der Karbide kommen pulvermetallurgische Werkstoffe auf Kobalt-, Nickel- oder Eisenbasis in Frage. Die Korngrösse liegt im Bereich 0,020 - 0,5 mm. Diese Werkstoffe weisen im allgemeinen einen Ausdehnungskoeffizient im Bereich von 12 auf ähnlich wie die beigemischten Karbide oder der als Endform verwendete feste Grundkörper. Wesentlich ist dabei, dass das Grundmaterial durch das heissisostatische Pressen eine Matrix hinreichend hohe Härte bildet, namentlich von mindestens 400 HV₁ und bevorzugt von mind. 500 HV₁. Besonders bevorzugt sind Grundmaterialien, die diese Härte bei langsamem Pressen, d.h. insbesondere langsamem Abkühlen, ergeben, da dadurch die Rissbildungsgefahr weiter vermindert und eine gleichmässige Härte erzielt wird.

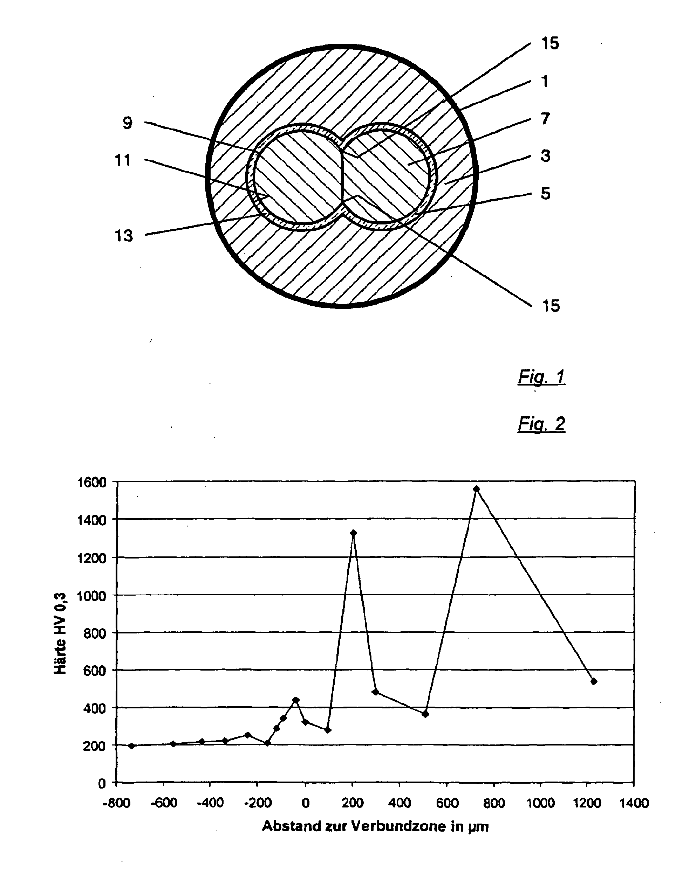

Fig. 1 zeigt einen Schnitt durch eine HIP - Kapsel 1. In der Kapsel 1 befindet sich das Extruderrohr 3 mit dem 8-förmigen Extruderkanal 5 mit dem darin angeordneten massiven Kern 7.

In dem Zwischenraum 9 zwischen Kern 7 und Wand 11 des Extruderkanals 5 ist das Pulver 13 eingefüllt, das pulvermetallurgisch in die Hartstoffschicht umgewandelt werden soll. Es wird z.B. bei senkrecht stehenden Kapseln mit einer Trichteranordnung eingefüllt und durch geeignete Massnahmen, z.B. Rütteln, verdichtet. Derartige Massnahmen und Vorgehensweisen sind an sich bekannt.

Die Kapsel 1 umgibt das Extruderrohr 3 möglichst eng, d.h. spaltfrei.

Während des heissisostatischen Pressens wird die Kapsel zusammengedrückt. Die geringfügige Kompression des Extruderrohrs 3 ist dabei ausreichend, die pulvermetallurgische Bildung der Hartstoffschicht aus dem erfindungsgemässen Metallpulver 13 zu bewirken.

Die Partikel der eigentlichen Harstoffkomponente des Pulvers 13 (Karbide, Boride) haben bevorzugt spratzige oder allgemein unregelmässige, runde oder eckige Formen. Sie können gemischt, gesintert und/oder agglomeriert sein. Ihre Grösse ist bevorzugt 2 bis 150 Mikrometer.

Die Grundkomponente des Metallpulvers sind Metalle und/oder Legierungspartikel, die bevorzugt eine kugelige oder spratzige Form aufweisen und durch Verdüsen hergestellt sind.

Die Kapsel 1 wird nach dem HIP-Prozess entfernt und der Kern 7 herausgezogen. Danach sind in der Regel nur noch Schleifen, Polieren usw. nötig, da durch den Kern 7 die Oberfläche bereits weitgehend vorgegeben ist, namentlich auch die Spickel 15, d.h. auch die scharfen Kanten zwischen den beiden Augen der Acht.

In einer alternativen Variante wird eine Kapsel verwendet, die im Zentrum ein 8-förmiges Rohr aufweist, das den Kern 7 ersetzt. Das Innere des Rohres steht dabei während des HIP-Prozesses unter dem HIP-Druck und wird damit gegen das umgebende Pulver 13 gepresst.

Die bessere Einwirkung des Drucks auf das Karbid-haltige Pulver lässt eine bessere Struktur der Harstoffschicht erwarten. In der Praxis haben sich jedoch Schichten als den Anforderungen entsprechend erwiesen, die nach der einen oder anderen Art hergestellt werden.

Das folgende Beispiel demonstriert die vorteilhaften Eigenschaften des erfindungsgemässen Metallpulvers.

### Vergleichsbeispiel 1:

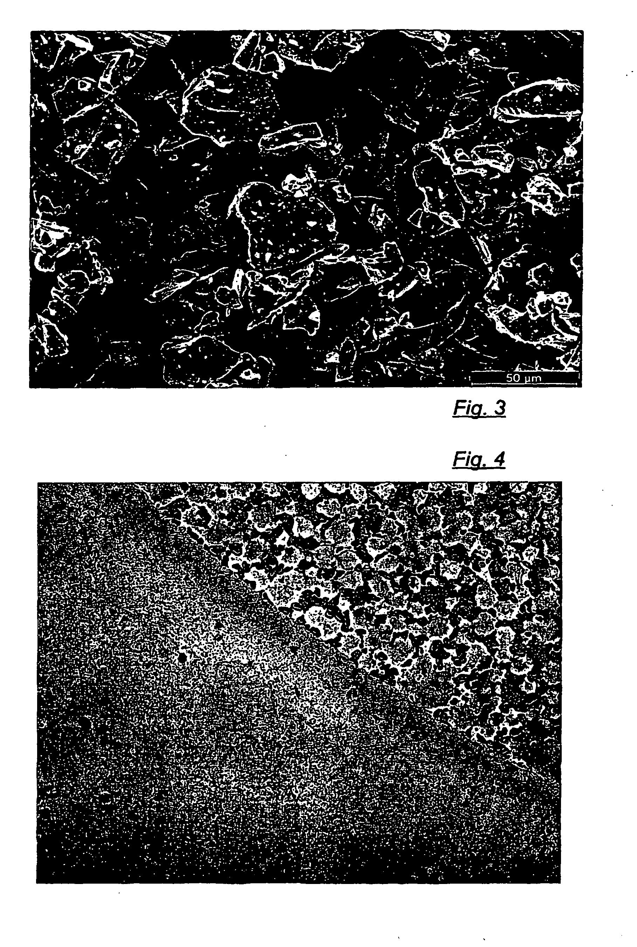

Ein Ni-Basispulver der Qualität HIP 40 (Korngröße: 20-125 µm; chemische Analyse: C = 0,2 %; Si = 3,5 %; Cr = 8,3 %; B = 1,7 %; Ni = 86,3 %) wurde im Verhältnis 20 Gewichtsprozent TiC (Korngröße 5-45 µm, Kornform in Fig. 3) und 80 Gewichtsprozent HIP 40 in einem Mischer während einer halben Stunde gemischt. Anschließend wurde das Pulver in eine Stahlkapsel gefüllt, evakuiert und verschlossen. Diese Kapsel mit der Pulvermischung wurde einer heissisostatischen Pressung im Bereich 900 °C, 5 Std. Haltezeit, Druck 1000 bar ausgesetzt und langsam in der HIP-Anlage abgekühlt. Der Körper wurde anschließend getrennt untersucht und als rissfrei beurteilt. Fig. 4 zeigt das Gefüge bei der Verbundzone von der Mischung und der Kapsel. Der entsprechende Härteverlauf in der Nähe der Verbundzone wird in Fig. 2 verdeutlicht. Die durchschnittliche Härte nach der HIP betrug in der Matrix (HIP 40) 431 HV_{0,3} und in dem Hartstoff (TiC) 1902 HV_{0,3}.

### Beispiel:

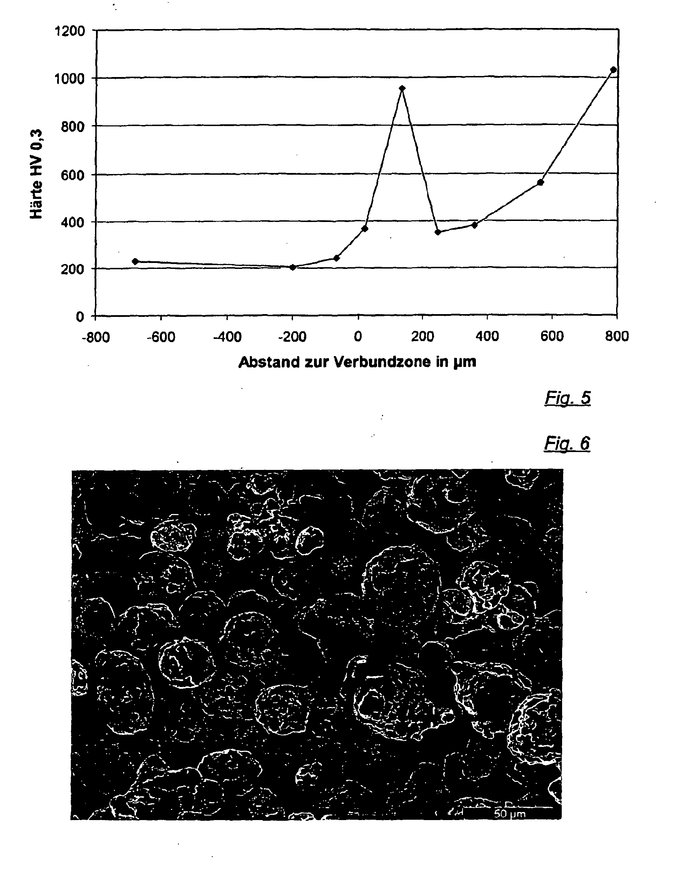

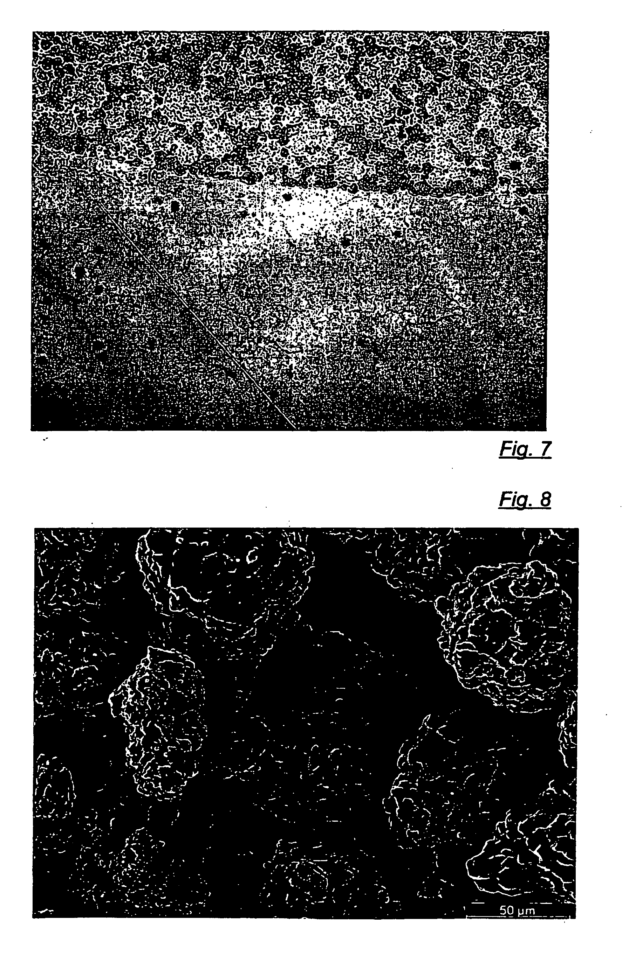

Ein Co-Basispulver der Qualität Stellit 6 (Korngröße: 20 - 150 µm; chemische Analyse: C = 1 %; Si = 1 %; Cr = 26 %; W = 5 %; Nb = 6 %; Co = 61 %) wurde im Verhältnis 40 Gewichtsprozent Cr₃C₂-NiCr (75-25) (agglomeriert, gesintert [Korngröße 20-45 µm, Kornform in Fig. 6]) und 60 Gewichtsprozent Stellit 6 in einem Mischer während einer halben Stunde gemischt. Anschließend wurde das Pulver in eine Stahlkapsel gefüllt, evakuiert und verschlossen. Diese Kapsel mit der Pulvermischung wurde einer heissisostatischen Pressung im Bereich 1200 °C, 4 Std. Haltezeit, Druck 1100 bar ausgesetzt und langsam in der HIP-Anlage abgekühlt. Der Körper wurde anschließend getrennt untersucht und als rissfrei beurteilt. Fig. 7 zeigt das Gefüge bei der Verbundzone von der Mischung und der Kapsel. Der entsprechende Härteverlauf in der Nähe der Verbundzone wird in Fig. 5 verdeutlicht. Die durchschnittliche Härte nach der HIP betrug in der Matrix (Stellit 6) 450 HV_{0,3} und in dem Hartstoff (Karbid) 1513 HV_{0,3}.

### Vergleichsbeispiel 2:

Ein Fe-Basispulver der Qualität X 235 (chemische Analyse: C = 2,5 %; Cr = 20 %; Mo = 1,3 %; V = 4,3 %; Nb = 2 %) wurde im Verhältnis 60 Gewichtsprozent VC (Korngröße 45-90 µm, Kornform in Fig. 8) und 40 Gewichtsprozent X 235 in einem Mischer während einer halben Stunde gemischt. Anschließend wurde das gemischte Pulver in eine Stahlkapsel gefüllt, evakuiert und verschlossen. DOiese Kapsel mit der Pulvermischung wurde einer heissisostatischen Pressung im Bereich 1100 °C, 3 Std. Haltezeit, Druck 1000 bar ausgesetzt und langsam in der HIP-Anlage abgekühlt. Der Körper wurde anschließend getrennt, untersucht und als rissfrei beurteilt. Die Härte in der Matrix X 235 lag nach HIP bei ca. 400 HV₁ und die Härte von VC lag bei 2200 HV_{0,3}. Eine Wärmebehandlung wurde nicht durchgeführt, wodurch die Rissbildungsgefahr vermieden wurde.

Als Grundwerkstoff können auch Lote verwendet werden. Dabei werden den Pulvern niedrig schmelzende Materialien wie Zink, Zinn, Silber oder Kupfer beigemischt. Dies erlaubt die Herabsetzung der Behandlungstemperatur und dadurch eine Reduzierung der Spannungen beim Abkühlen.

Aus der vorangehenden Beschreibung sind dem Fachmann zahlreiche Abwandlungen zugänglich, ohne den Schutzbereich für die Erfindung zu verlassen, der durch die Ansprüche definiert ist.

Denkbar ist z.B.:
- Herstellung von Hartstoffschichten auf anderen Grundkörpern aus Stahl oder anderem Material von ähnlichem Ausdehnungsverhalten;
- Herstellung von pulvermetallurgischen Hartstoffschichten auf anderen Objekten als Extruderrohren, insbesondere solchen mit kritischen Zonen wie scharfen Kanten;
- Der Grundkörper kann selbst pulvermetallurgisch hergestellt werden, z. B. kann dazu Stahlpulver verwendet werden, das durch Stahlplatten von dem hartstoffhaltigen Pulver getrennt ist. Insbesondere können die Stahlplatten die Form der Wand des Extruderkanals haben. Damit können in einem HIP-Vorgang das Extruderrohr ohne Verbindungsnaht im Körper und die hochwertige Hartstoffschicht hergestellt werden.

### Glossar

| | |
|---|---|
| HIP | Heissisostatisches Pressen |
| Ausdehnungskoeffizient | mittlerer linearer Ausdehnungskoeffizient in Einheiten von 10⁻⁶ grd⁻¹ |

## Patentansprüche

1. Verfahren zur Herstellung einer Schicht auf einem Grundkörper aus Stahl oder einem anderen Werkstoff mit einem Ausdehnungskoeffizienten von mindestens 10, wobei die Schicht durch heissisostatisches Pressen aufgebracht wird,
das Pulver für das heissisostatische Pressen aus einer Mischung aus einem Pulvergrungdstoff aus legierten und/oder unlegierten Metallen und einem Hartstoff aus Karbiden und/oder Boriden besteht, die reinen Karbide und Boride einen Ausdehnungskoeffizienten von mindestens 6 aufweisen und der Pulvergrundstoff so gewählt wird, dass er nach dem helssisostatischen Pressen eine Härte von mindestens 400 HV₁ aufweist,
**dadurch gekennzeichnet, dass** der Hartstoff Chromkarbid (Cr₃C₂) und eine Chrom-Nickel-Legierung umfasst, deren Anteil höchstens gleich, bevorzugt höchstens halb so gross ist wie derjenige des Chromkarbids.

2. Verfahren gemäss Anspruch 1, **dadurch gekennzeichnet, dass** der Pulvergrundstoff so gewählt wird, dass er nach dem heissisostatischen Pressen eine Härte von mindestens 500 HV₁ aufweist.

3. Verfahren gemäss den Ansprüchen 1 oder 2, **dadurch gekennzeichnet, dass** das heissisostatische Pressen eine Behandlung bei mindestens 500°C unter mindestens 500 bar Druck über mindestens eine Stunde umfasst.

4. Verfahren gemäss einem der Ansprüche 1 bis 3, **dadurch gekennzeichnet, dass** der Pulvergrundstoff im Wesentlichen aus Chrom-, Kobalt-, Nickel- und/oder Eisenlegierungen besteht.

5. Verfahren gemäss einem der Ansprüche 1 bis 3, **dadurch gekennzeichnet, dass** der Pulvergrundstoff im Wesentlichen ein Lot ist, das eines oder mehrere der folgenden Metalle umfasst: Zink, Zinn, Silber, Kupfer.

6. Verfahren gemäss einem der Ansprüche 1 bis 5, **dadurch gekennzeichnet, dass** die Partikel des Hartstoffes eine Grösse von 2 bis 150 Mikrometer aufweisen.

7. Verfahren gemäss Anspruch 6, **dadurch gekennzeichnet, dass** die Partikel des Pulvergrundstoffes eine Grösse von 10 bis 500 Mikrometer aufweisen.

8. Verfahren gemäss einem der Ansprüche 1 bis 7, **dadurch gekennzeichnet, dass** der Hartstoff gesintert und/oder agglomeriert ist.

9. Verfahren gemäss einem der Ansprüche 1 bis 8, **dadurch gekennzeichnet, dass** der Hartstoff einen Anteil von 20 bis 80 Gewichts-% des Pulvers darstellt.

10. Verfahren gemäss einem der Ansprüche 1 bis 9, **dadurch gekennzeichnet, dass** das Pulver für das heissisostatische Pressen während mind. 20 min. durchgemischt wird, um eine gleichmässige Vermischung der Komponenten zu erhalten.

11. Verfahren gemäss einem der Ansprüche 1 bis 10, **dadurch gekennzeichnet, dass** für den Grundkörper ein Pulver aus dem Material des Grundkörpers verwendet wird und eine Wand mindestens zwischen dem Pulver des Grundkörpers und dem Hartstoff angeordnet wird, die die zu beschichtende Oberfläche bildet.

12. Verfahren gemäss Anspruch 11, **dadurch gekennzeichnet, dass** die Wand aus dem Material des Grundkörpers besteht.

13. Anwendung des Verfahrens gemäss einem der Ansprüche 1 bis 12 zur Herstellung einer Schicht auf der Wand (11) des Extruderkanals (15) eines Extruderrohres (3) für einen Doppelschneckenextruder, wobei die Schicht wenigstens einen wesentlichen Teil der Oberfläche der Wand bedeckt.

## Claims

1. Method for producing a coating on a base body of steel or another material having an expansion coefficient of at least 10, the coating being applied by hot isostatic pressing, the powder for hot isostatic pressing being composed of a mixture of a powder base of alloyed and/or unalloyed metals and of a hard material of carbides and/or borides, the pure carbides and borides having an expansion coefficient of at least 6, and the powder base being selected such that it has a hardness of at least 400 HV₁ after hot isostatic pressing, **characterised in that** the hard material comprises chromium carbide (Cr₃C₂) and a chromium-nickel alloy whose content is at most equal to and preferably at most half that of the chromium carbide.

2. Method according to claim 1, **characterised in that** the powder base is selected such that it has a hardness of at least 500 HV₁ after hot isostatic pressing.

3. Method according to claims 1 or 2, **characterised in that** the hot isostatic pressing operation comprises a treatment at a temperature of at least 500 °C at a pressure of at least 500 bar during at least one hour.

4. Method according to one of claims 1 to 3, **characterised in that** the powder base is essentially composed of chromium, cobalt, nickel, and/or iron alloys.

5. Method according to one of claims 1 to 3, **characterised in that** the powder base is essentially a soldering metal comprising one or a plurality of the following metals: zinc, tin, silver, copper.

6. Method according to one of claims 1 to 5, **characterised in that** the particles of the hard material have a size of 2 to 150 micrometers.

7. Method according to claim 6, **characterised in that** the particles of the powder base have a size of 10 to 500 micrometers.

8. Method according to one of claims 1 to 7, **characterised in that** the hard material is sintered and/or agglomerated.

9. Method according to one of claims 1 to 8, **characterised in that** the hard material represents a relative amount of 20 to 80 weight % of the powder.

10. Method according to one of claims 1 to 9, **characterised in that** the powder for hot isostatic pressing is mixed for at least 20 min. in order to achieve a uniform mixture of the components.

11. Method according to one of claims 1 to 10, **characterised in that** a powder of the material of the base body is used for the base body and a wall that forms the surface that is to be coated is arranged at least between the powder of the base body and the hard material.

12. Method according to claim 11, **characterised in that** the wall consists of the material of the base body.

13. Application of the method according to one of claims 1 to 12 for producing a coating on the wall (11) of the extruder channel (15) of an extruder barrel (3) for a twin screw extruder, the coating covering at least a substantial part of the wall surface.

## Revendications

1. Procédé de production d'une couche sur un corps de base en acier ou un autre matériau ayant un coefficient de dilatation d'au moins 10, la couche étant appliquée par pressage isostatique à chaud, la poudre pour le pressage isostatique à chaud étant composée d'un mélange d'un matériau de base en poudre de métaux alliés et/ou non alliés et d'une matière dure de carbures et/ou borures, les carbures et borures purs ayant un coefficient de dilatation d'au moins 6 et le matériau de base en poudre étant choisi de manière à avoir une dureté d'au moins 400 HV₁ après le pressage isostatique à chaud, **caractérisé en ce que** la matière dure comprend du carbure de chrome (Cr₃C₂) et un alliage chrome-nickel dont la proportion est au plus égale à, et préférablement au plus égale à la moitié de, celle du carbure de chrome.

2. Procédé selon la revendication 1, **caractérisé en ce que** le matériau de base en poudre est choisi de manière à avoir une dureté d'au moins 500 HV₁ après le pressage isostatique à chaud.

3. Procédé selon la revendication 1 ou 2, **caractérisé en ce que** le pressage isostatique à chaud comprend un traitement à au moins 500 °C sous une pression d'au moins 500 bar pendant au moins une heure.

4. Procédé selon l'une des revendications 1 à 3, **caractérisé en ce que** le matériau de base en poudre est essentiellement composé d'alliages de chrome, cobalt, nickel et/ou de fer.

5. Procédé selon l'une des revendications 1 à 3, **caractérisé en ce** le matériau de base en poudre est essentiellement une brasure qui comprend l'un ou plusieurs des métaux suivants: zinc, étain, argent, cuivre.

6. Procédé selon l'une des revendications 1 à 5, **caractérisé en ce que** les particules de la matière dure présentent une taille de 2 à 150 micromètres.

7. Procédé selon la revendication 6, **caractérisé en ce que** les particules du matériau de base en poudre présentent une taille de 10 à 500 micromètres.

8. Procédé selon l'une des revendications 1 à 7, **caractérisé en ce que** la matière dure est frittée et/ou agglomérée.

9. Procédé selon l'une des revendications 1 à 8, **caractérisé en ce que** la matière dure représente une proportion de 20 à 80 % en poids de la poudre.

10. Procédé selon l'une des revendications 1 à 9, **caractérisé en ce que** la poudre pour le pressage isostatique à chaud est mélangée pendant au moins 20 min. afin d'obtenir un mélange uniforme des composants.

11. Procédé selon l'une des revendications 1 à 10, **caractérisé en ce qu'**une poudre du matériau du corps de base est utilisée pour le corps de base et qu'une paroi qui forme la surface à revêtir est agencée au moins entre la poudre du corps de base et la matière dure.

12. Procédé selon la revendication 11, **caractérisé en ce que** la paroi est constituée du matériau du corps de base.

13. Application du procédé selon l'une des revendications 1 à 12 pour la production d'une couche sur la paroi (11) du canal d'extrusion (15) d'un cylindre d'extrusion (3) pour une extrudeuse à double vis, la couche recouvrant au moins une partie substantielle de la surface de la paroi.
